# EUROPEAN PATENT APPLICATION

(11) **EP 2 793 018 A1**
(43) Date of publication of application: **22.10.2014**
(21) Application number: 13164561.6
(22) Date of filing: 19.04.2013
(51) Int. Cl.: G01N 27/18

(54) **Thermal conductivity based gas sensor**

(71) Applicant: NXP B.V., 5656 AG Eindhoven (NL)
(72) Inventor: Falepin, Annelies, Redhill, Surrey RH1 1SH (GB); Gravesteijn, Dirk, Redhill, Surrey RH1 1SH (GB)
(74) Representative: Crawford, Andrew

(57) **Abstract**

A thermal conductivity based gas sensor and a method of detecting a gas using a thermal conductivity based gas sensor. The sensor includes an electrically resistive sensor element exposed to an environment surrounding the sensor (60) for contact with a target gas. The sensor also includes control circuitry (70). The control circuitry (70) is operable to drive the sensor element at a first frequency to determine an ambient relative humidity level in the surrounding environment. The control circuitry (70) is also operable to drive the sensor element at a second frequency lower than the first frequency for detecting the target gas. The gas sensor is operable to correct a measurement taken at the second drive frequency for cross sensitivity to relative humidity using the ambient relative humidity level determined at the first drive frequency.

## Description

### BACKGROUND OF THE INVENTION

This invention relates to an integrated circuit including a thermal conductivity based gas sensor.

Nowadays, integrated circuits may comprise a plethora of different sensors, such as ambient light (AL) sensors, temperature (T) sensors, gas sensors, relative humidity (RH) sensors, specific analyte detection sensors, and so on.

Integrated circuits of this kind have a wide range of applications. For example, they can be used in the field of supply chain management to track and monitor the freshness of food and beverages. They can also be used as environmental sensors, for example as part of a heating, ventilation and air conditioning (HVAC) system in an automobile or in a building (e.g. a Smart Building). Additional applications include those in agricultural (e.g. the sensing of environmental conditions in greenhouses) or in medical fields. Their provision in mobile communications devices such as mobile telephones, tablets or laptops can also enable a wide range of further applications that require measurements of local environmental factors.

The provision of sensors in integrated circuits of this kind allows devices to be produced that have a small form factor. For example, due to their small form factor, integrated circuits incorporating one or more sensors can be included in Radio Frequency Identification (RFID) tags, allowing for easy programming and readout. Moreover, the provision of sensors in integrated circuits of this kind allows large numbers of devices to be manufactured cheaply, using established semiconductor processing techniques.

One kind of sensor that can be implemented in an integrated circuit is a thermal conductivity based gas sensor. These operate by passing a current through an electrically resistive sensor element, which causes the sensor element to heat up. The heat that is generated is dissipated by the surrounding environment including the substrate of the integrated circuit and also by any gas that is present in the vicinity of the sensor element. The resistivity of the sensor element is proportional to its temperature, and the temperature of the sensor element is in turn sensitive to the thermal conductivity of the gas (which governs the rate at which the gas can conduct heat away from the sensor element). Since the thermal conductivity of the gas is determined by its density and composition, it follows that electrical resistance measurements of the sensor element can therefore provide information about the gas. Since different gases have different thermal conductivities, the sensor can in principal be used to determine the presence and composition of a gas.

Thermal conductivity based gas sensors of this kind are known to be affected by cross sensitivity to relative humidity and ambient temperature. In order to correct for these factors, it is customary to provide a separate relative humidity sensor and temperature sensor. Optimally, these additional sensors would be provided in close proximity to the gas sensor. However, integration of such a diverse range of sensors on a single substrate is difficult. Accordingly, the additional sensors are typically provided on a separate substrate and/or in a separate package.

### SUMMARY OF THE INVENTION

Aspects of the invention are set out in the accompanying independent and dependent claims. Combinations of features from the dependent claims may be combined with features of the independent claims as appropriate and not merely as explicitly set out in the claims.

According to an aspect of the invention, there is provided a thermal conductivity based gas sensor. The sensor includes an electrically resistive sensor element exposed to an environment surrounding the sensor for contact with a target gas. The sensor also includes control circuitry. The control circuitry is operable to drive the sensor element at a first frequency for determining an ambient relative humidity level in the surrounding environment. The control circuitry is also operable to drive the sensor element at a second frequency lower than the first frequency for detecting the target gas. The gas sensor is operable to correct a measurement taken at the second drive frequency for cross sensitivity to relative humidity using the ambient relative humidity level determined at the first drive frequency.

According to another aspect of the invention, there is provided a method of detecting a gas using a thermal conductivity based gas sensor. The method includes driving an electrically resistive sensor element of the gas sensor at a first frequency to determine an ambient relative humidity level in an environment surrounding the sensor. The method also includes driving the sensor element at a second frequency lower than the first frequency for detecting the gas. The method further includes correcting a measurement taken at the second drive frequency for cross sensitivity to relative humidity using the ambient relative humidity level determined at the first drive frequency.

Driving the electrically resistive sensor element of a thermal conductivity based gas sensor at a frequency that is higher than its usual operating frequency reduces its sensitivity to the target gas. However, at this higher operating frequency, the cross sensitivity of the sensor to humidity tends to remain (since the reduction in sensitivity to humidity at higher drive frequencies outweighs the corresponding reduction in sensitivity to the presence of the target gas). This effect can be used to correct measurements taken at a normal operating frequency of the sensor for the effects of relative humidity, without the need to provide a separate humidity sensor.

Embodiments of this invention can be used as sensors for detecting a range of different gases. In particular, the target gas may be CO₂. However, it is also envisaged that the target gas could be H₂, He or any gas having a value of thermal conductivity that differs substantially from the main components of air (the typical ambient gas for normal applications), namely N and O.

In general, the selection of appropriate operating frequencies is determined by the specific time constant of the system, which is itself generally determined by the physical dimensions of the system. Typically, higher frequencies are appropriate for systems that are physically smaller. For gas sensors implemented in an integrated circuit, the first drive frequency (namely the higher frequency at which a determination of relative humidity can be made) is optimally in the range 5 kHz ≤ f₁ < 1 MHz, while the second drive frequency (for detecting the target gas) is optimally in the range 50 Hz ≤ f₂ ≤ 1 kHz.

The control logic can, in some examples, be integrated with the electrically resistive sensor element the same semiconductor substrate. In other examples, the control logic and the electrically resistive sensor element can be provided separately. Where provided separately, the control logic and the electrically resistive sensor element can still be provided in a common semiconductor package (for example, on separate dies). The package can include an opening for allowing access by the gas sensor to the surrounding environment.

In some embodiments, the gas sensor can be provided with a temperature sensor, for correcting gas detection measurements for cross sensitivity to ambient temperature. The temperature sensor can, in some examples, be integrated with the electrically resistive sensor element and the control circuitry on a single semiconductor substrate.

As described herein, the gas sensor can be implemented as a semiconductor device. In some embodiments, the electrically resistive sensor element can be located on or in a metallization stack on a semiconductor substrate. The electrically resistive sensor element can comprise, for example, Al, W, TiW(N), Pt or Cu. These materials are compatible with back end of line (BEOL) semiconductor manufacturing processes.

According to another aspect of the invention, there is provided an integrated circuit including a thermal conductivity based gas sensor of the kind described above.

According to a further aspect of the invention, there is provided a Radio Frequency Identification (RFID) tag including a thermal conductivity based gas sensor or an integrated circuit of the kind described above.

According to another aspect of the invention, there is provided a mobile communications device including a thermal conductivity based gas sensor or an integrated circuit of the kind described above.

According to a further aspect of the invention, there is provided a heating, ventilation and air conditioning (HVAC) system including a thermal conductivity based gas sensor or an integrated circuit of the kind described above.

### BRIEF DESCRIPTION OF THE DRAWINGS

Embodiments of the present invention will be described hereinafter, by way of example only, with reference to the accompanying drawings in which like reference signs relate to like elements and in which:
Figure 1 shows an example of a thermal conductivity based gas sensor according to an embodiment of the invention;
Figure 2 shows additional details of the gas sensor shown in Figure 1;
Figure 3 shows the response of a thermal conductivity based gas sensor having an electrically resistive sensor element when driven at a normal operating frequency;
Figure 4 illustrates the cross sensitivity to relative humidity of a thermal conductivity based gas sensor having an electrically resistive sensor element when driven at a normal operating frequency;
Figure 5 shows the response of a thermal conductivity based gas sensor having an electrically resistive sensor element when driven at an operating frequency that is substantially higher than a normal operating frequency;
Figure 6 illustrates the cross sensitivity to relative humidity of a thermal conductivity based gas sensor having an electrically resistive sensor element when driven at an operating frequency that is substantially higher than a normal operating frequency;
Figure 7 schematically illustrates the steps in a method of detecting a gas using a thermal conductivity based gas sensor according to an embodiment of the invention.

### DETAILED DESCRIPTION

Embodiments of the present invention are described in the following with reference to the accompanying drawings.

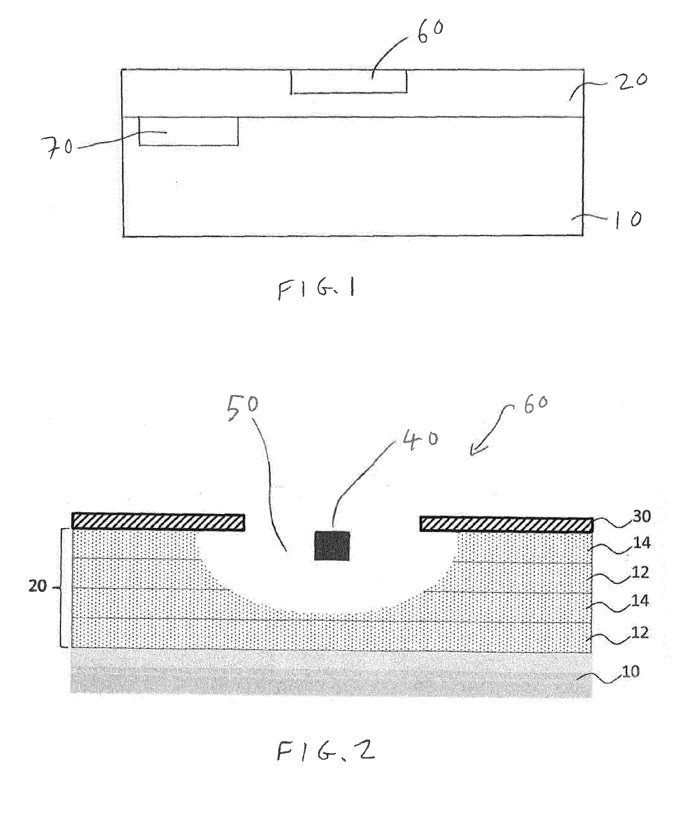

FIG. 1 schematically illustrates a thermal conductivity based gas sensor according to an embodiment of the invention. The sensor in this example is integrated in a semiconductor device comprising a semiconductor substrate 10, upon which there is provided a metallization stack 20. Metallization stacks are well known in the field of semiconductor manufacturing, and typically comprise a plurality of layers metal separated by dielectric, for interconnecting the various components and devices on a substrate.

The gas sensor includes a sensor region 60, in which can be located the sensor element(s) which come into contact with the gas to be sensed. In this example, the sensor region 60 is located within the metallization stack 20. In other examples, the sensor region 60 can be located outside the metallization stack 20, for example above a passivation layer on the stack.

The gas sensor also includes control circuitry 70 for driving the sensor element(s) as will be described in more detail below. The control circuitry 70 in this embodiment in provided in the substrate 10, and is interconnected with the sensor element(s) in the sensor region 60 through the metallization stack 20. The control circuitry 70 need not be provided in the substrate 10 as the sensor region 60. For example, the control circuitry may be provided in a separate substrate. The two substrates can, in some examples, be located in a common semiconductor package having an opening to allow the sensor region access to the surrounding environment to detect a target gas.

An integrated circuit comprising a thermal conductivity based gas sensor of the kind described herein can be incorporated in a radio frequency identification (RFID) tag. The sensor can be connected to circuitry of the RFID tag, including features such as an antenna to allow readout of sensing data collected by the sensor. Similarly, an integrated circuit of the kind described herein, may be incorporated into a mobile communications device such as a laptop, tablet or mobile telephone to allow the device to collect data relating to the presence of a target gas and use the data for various applications.

It is further envisaged that an integrated circuit of the kind described herein, could be incorporated into a heating, ventilation and air conditioning (HVAC) system. This would allow the HVAC system to collect information relating to the presence of one or more target gasses in the heating, ventilation or air conditioning of, for example, a building (for example a greenhouse or office building), or a vehicle such as an automobile or an aircraft.

Figure 2 illustrates additional details of the gas sensor of Figure 1. As shown in Figure 2, the metallization stack 20 includes a plurality of layers. Typically, as is known in the art, the stack 20 can include a plurality of layers 14 containing patterned metal features, which electrically interconnect components provided in the substrate 10. These layers 14 can be separated by layers of dielectric 12, which can include conductive conduits such as metal filled vias for connecting together the metal features in adjacent layers 14. Such conduit-comprising dielectric layers 12 will also be referred to as via layers.

Further via layers, e.g. between the bottom metal layer 14 and the substrate 10, and/or between the upper metal layer 14 and a passivation stack 30 may also be provided. The passivation stack 30 may comprise a stack of passivation layers, which typically comprise dielectric materials such as silicon nitride and/or silicon oxide, although other materials may be equally feasible as will be apparent to the skilled person. In an alternative embodiment, the passivation stack 30 is replaced by a single passivation layer.

In the embodiment shown in FIG. 2, the upper metallization layer 14 has been patterned such that the thermal conductivity sensor comprises a conductive release structure in the form of an electrically resistive sensor element 40. Whether or not the sensor element 40 is formed within a metallization stack 20 as described in relation the present embodiment, the sensor element 40 can, for example, comprise electrically conductive materials such as Al, W, TiW(N), Pt or Cu. The choice of material can, for example, be made in accordance with the intended target gas to be detected.

In examples in which the sensor is formed on a semiconductor substrate (e.g. in or on a metallization stack), the electrically conductive materials mentioned above are all advantageously known to be compatible with standard back end of line (BEOL) processes.

The conductive release structure is suspended in a cavity 50, which may be formed by partial removal of the dielectric material of the passivation stack 20, e.g. through one or more etching steps. In this way, the sensor element 40 is presented to the surrounding environment, whereby it may come into contact with a target gas.

As noted above, sensor element 40 is conductively coupled to control circuitry (not shown in Figure 2) for driving the sensor element. To drive the sensor element 40, the control circuitry can apply a predefined current or voltage at a predetermined frequency. The waveform of the applied current or voltage can, for example, be sinusoidal.

The applied current or voltage causes the sensor element 40 to heat up. The heat is dissipated into the surrounding environment, including into a gas that is in contact with the sensor element. The resistivity of the sensor element is proportional to its temperature, and the temperature of the sensor element is in turn sensitive to the thermal conductivity of the gas (which governs the rate at which the gas can conduct heat away from the sensor element). Since the thermal conductivity of the gas is determined by its density and composition, it follows that electrical resistance measurements of the sensor element can therefore provide information about the gas. Since different gases have different thermal conductivities, the sensor can in principal be used to determine the presence and composition of a gas.

As described in more detail below, it has been found that the cross sensitivity of a thermal conductivity based gas sensor to relative humidity varies with operating frequency. This variation in cross sensitivity can be used to factor out the effects of humidity when determining the presence and/or concentration of a target gas.

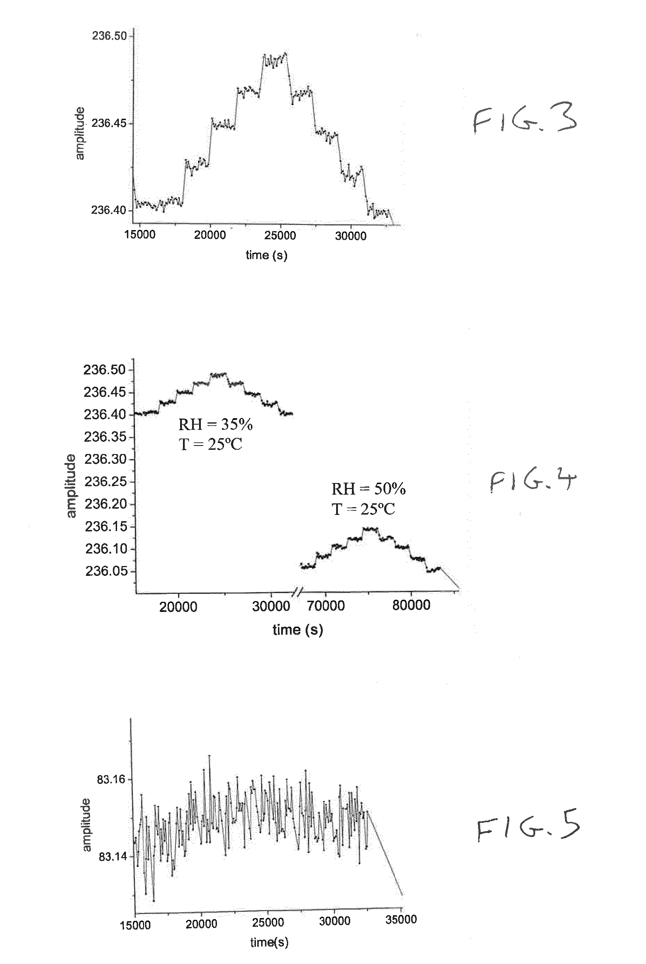

Figure 3 illustrates the response of a thermal conductivity based gas sensor having an electrically resistive sensor element when driven at a normal operating frequency (the data in Figure 3 were collected at an operating frequency of 100 Hz). The x-axis indicates time in seconds, while the y-axis is indicative of the resistivity of the sensor element. In Figure 3, the gas sensor is exposed to different levels of a target gas over time (in this example, CO₂), causing a change in the resistivity of the sensor element according to the mechanism noted above. The stepped levels in the graph reflect step changes in the concentration of the target gas from 0ppm to 2000ppm and then back to 0ppm in steps of 500pom.

The above noted cross sensitivity of a thermal conductivity based gas sensor having an electrically resistive sensor element to relative humidity is demonstrated in Figure 4. The data in Figure 4 were collected at a normal operating frequency (again, 100 Hz, as in Figure 3). Again, the target gas was CO₂. Effects of cross sensitivity to ambient temperature were ruled out by keeping the ambient temperature constant at 25°C through the sweep. However, in this example, the relative humidity in the environment surrounding the gas sensor is varied.

Initially, the relative humidity in the surrounding environment is set at 35%, and the response of the sensor element of the gas sensor was measured at a variety of levels of gas concentration (0ppm to 2000ppm and then back to 0ppm in steps of 500ppm, as in Figure 3). Following this, the relative humidity level was adjusted to 50%, and the response of the sensor element was measured at the same variety of levels of gas concentration. From Figure 4 it is clear that at the elevated level of relative humidity, the response of the sensor element of the gas sensor is suppressed. Note that unless corrections are made for relative humidity levels, a change in humidity could easily be miss-interpreted as a change in gas concentration. This can greatly limit the resolution of the gas sensor. As described below, embodiments of this invention can provide a solution to this problem, without the need to provide a separate humidity sensor.

Figure 5 shows the response of a thermal conductivity based gas sensor having an electrically resistive sensor element, when driven at an operating frequency that is substantially higher than a normal operating frequency. In the present example, the operating frequency was 5 kHz, as compared to the operating frequency of 100 Hz used to collect the results in Figures 3 and 4. The target gas was again CO₂ and the same sweep of gas concentration was made as in Figures 3 and 4 (0ppm to 2000ppm and then back to 0ppm in steps of 500ppm).

In Figure 5, it can be seen that the overall response of the sensor element of the gas sensor is suppressed compared to the response seen at the normal operating frequency (compare the amplitude of the measured signal in Figure 5 with those of Figures 3 and 4). The response of the sensor to changes in gas concentration is suppressed also (note that the distinct step changes seen in Figures 3 and 4 are not present, despite that changes in gas concentration). Nevertheless, some correlation with as concentration does remain, as demonstrated by the shallow peak seen at the centre of the plot in Figure 5).

Accordingly, it has been found that the sensitivity of a thermal conductivity based gas sensor is suppressed as the operating frequency increases. At some point, the sensitivity of the sensor to the concentration of the target gas in the surrounding environment may be suppressed to the extent that it can no longer be resolved. However, it will be appreciated that at normal and intermediate operating frequencies, the sensitivity to target gas concentration is, at least to some extent, retained.

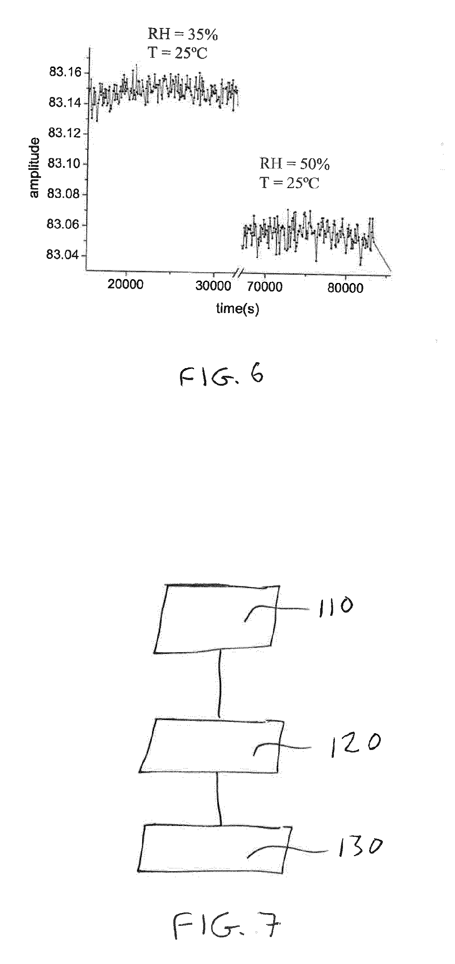

Figure 6 illustrates the cross sensitivity to relative humidity of a thermal conductivity based gas sensor having an electrically resistive sensor element when driven at an operating frequency that is substantially higher than a normal operating frequency. The conditions in Figure 6 were similar to those noted above in relation to Figure 4: the target gas was CO₂, the temperature was held constant at 25°C, the gas concentration was twice swept from 0ppm to 2000ppm and back to 0ppm again, initially at a relative humidity level of 35%, and subsequently at a relative humidity level of 50%. However, in contrast to Figure 4, the operating frequency was 5 kHz as in Figure 5.

The effects of the elevated operating frequency discussed above in relation to Figure 5 are again seen in Figure 6. Thus, the overall response of the sensor is reduced, and the sensitivity of the sensor to changes in gas concentration is also strongly suppressed. However, comparing the left hand side of the plot in Figure 6 (in which the relative humidity level was set to 35%) with the right hand side of the plot (in which the relative humidity level was set to 50%), it can be seen that the cross sensitivity of the sensor to the level of relative humidity in the surrounding environment is to some extent retained. Accordingly, while the cross sensitivity to relative humidity has also been suppressed by the increase in operating frequency, it has not been suppressed to the same extent to which the sensitivity of the sensor to the target gas concentration has been suppressed.

Thus, it has been found, that as the operating frequency of the sensor is increased above its normal operating frequency, the rate at which the sensitivity to the target gas concentration is reduced is proportionally lower that the rate at which the cross sensitivity to relative humidity is reduced. It follows that by operating the thermal conductivity based gas sensor at a high frequency (by which is meant, a frequency higher than the normal range of operating frequencies of the gas sensor), information regarding the relative humidity level present in the surrounding environment can be collected. This information can be used to correct gas concentration readings taken at the normal operating frequency of the sensor.

Figure 7 schematically illustrates the steps in a method of detecting a gas using a thermal conductivity based gas sensor according to an embodiment of the invention.

In a first step 110, the gas sensor is operated at a high operating frequency for determining an ambient relative humidity level in the environment surrounding the gas sensor. The control circuitry 70 can, for example, drive the electrically resistive sensor element 40 at a pre-determined first frequency, where the first frequency is higher than the normal operating frequency range of the gas sensor for making gas concentration measurements. At this higher operating frequency, it is expected that the sensitivity of the sensor to gas concentration is substantially, or completely suppressed. The response of the gas sensor at the higher frequency is therefore primarily dependent upon the residual cross sensitivity of the sensor to relative humidity. Thus, in the first step 110, a determination of the ambient level of relative humidity in the surrounding environment can be made according to the measured response. The result of this evaluation can be stored by the control circuitry for subsequent use. To this end, the gas sensor can include or be connectable to storage such as non-volatile memory (e.g. provided on the same substrate as the sensor and/or control circuitry).

In a next step 120, the gas sensor is operated at a second operating frequency that is lower than the first frequency. The control circuitry 70 can, for example, drive the electrically resistive sensor element 40 at the second frequency. The second frequency is a frequency within the normal operating range of the gas sensor for detecting the target gas. Accordingly, by measuring the response of the sensor element, the determination of the presence and/or the concentration of the target gas can be made. As described in detail above, this determination is subject to errors associated with cross sensitivity to relative humidity.

As described above in relation to step 110, the measurement or measurements made in step 120 as to the determination of the target gas can be stored by the control circuitry for subsequent use.

Note that the order of step 110 and step 120 can, in some examples, be reversed, whereby the determination of the ambient level of relative humidity is made after the measurement for detecting the target gas. However, steps 110 and 120 should precede the correction step 130 described below, since the information collected during the steps 110 and 120 is needed for the correction.

In some examples, the control circuitry can periodically increase the operating frequency at which the electrically resistive sensor element is driven, to make an evaluation of the level of relative humidity for use over a next series of measurements of gas concentration. For example, in an environment in which it is expected that levels of relative humidity will vary more slowly than the concentration of the target gas, it may be required to measure relative humidity less regularly. The periodicity which the ambient humidity level is determined (e.g. one a minute, hourly, daily...) can thus be chosen to suit the application for which the sensor is to be used. In contrast, measurements of gas concentration can be more frequent (for example, they can be substantially continuous, at least when the sensor is not currently operating at the higher frequency).

In a further step 130, the gas sensor can correct the measurement or measurements made in step 120 for cross sensitivity to the ambient relative humidity level using the measurement or measurements made during step 110. Typically, the correction would involve applying a correction factor to the measurement or measurements of gas concentration made in step 120, the correction factor itself being determined by the level of relative humidity determined in step 120. In this way, accurate measurements of target gas concentration can be produced. Moreover, the corrections for relative humidity can be made without the need to provide a separate humidity sensor in the device. This can simplify the construction of the sensor, reducing costs.

In some embodiments, the gas sensor can further include a temperature sensor. The temperature sensor itself can be conventional in configuration and in some examples can be provided on the same semiconductor substrate as the gas sensor and/or control circuitry. The temperature sensor can be used to factor out cross sensitivity of the gas sensor to changes in ambient temperature in the environment surrounding the gas sensor. This further correction can form part of the correction process in step 130 in Figure 7. The temperature sensor can be located close to the gas sensor, to improve the accuracy of the measurements for correcting the gas concentration readings.

The method described above in relation to Figure 7 can, in such examples, be modified by the addition of a temperature measurement step. This temperature measurement step can take place any time prior to the correction step 130, so that the measured temperature can be included as an input to the correction.

The first and second frequencies used in accordance with embodiments of the invention can be selected in accordance with the configuration of the gas sensor itself. In particular, the thermal time constant of the system (which is the product of the thermal resistance and the thermal capacitance of the system) governs the sensitivity of the sensor to the concentration of the target gas. As the operating frequency reaches and exceeds the thermal time constant, the sensitivity of the sensor to gas concentration reduces. This is because the sensor element is unable to heat up during the short "on time" of the applied current or voltage, whereby the sensitivity of the system to heat loss by dissipation from the sensor element to the target gas is diminished. The thermal resistance and thermal capacitance are themselves determined by the construction (e.g. size, shape, composition) of the gas sensor. Calibration of the gas sensor, to determine appropriate operating frequencies for steps 110 and 120 in the method described above can be achieved either by modelling or by placing a test sample in a controlled environment and setting the humidity level and gas concentration to known values while monitoring the response of the sensor. Calibration can also include recording factors for use in the correction step 130 described above.

For a thermal conductivity based gas sensor formed in an integrated circuit, it has been found that the first frequency, at which the level of relative humidity can be determined is optimally in the range 5 kHz ≤ f₁ ≤ 1 MHz. The normal operating frequency of a thermal conductivity based gas sensor formed in an integrated circuit is optimally in the range 50 Hz ≤ f₂ ≤ 1 kHz. Although frequencies within these ranges will allow operation of a thermal conductivity based gas sensor on a semiconductor substrate, the particular optimal frequency for a given sensor will, as noted above, be determined by details of its particular construction.

Different kinds of target gas can be detected by a thermal conductivity based gas sensor of the kind described herein. The target gas should have a value of thermal conductivity that differs from the thermal conductivity of the surrounding ambient environment. For example, where the gas sensor is to be used in a building such as a smart building, the target gas should have a thermal conductivity that is different from that of air. In a particular example, a thermal conductivity based gas sensors of the kind described herein can be used for CO₂ detection, since the thermal conductivity of CO₂ is indeed substantially different from that of air. Other example target gases include He and H₂ since, again, the thermal conductivities of both gases differ substantially from that of air.

Accordingly, there has been described a thermal conductivity based gas sensor and a method of detecting a gas using a thermal conductivity based gas sensor. The sensor includes an electrically resistive sensor element exposed to the environment surrounding the sensor for contact with a target gas. The sensor also includes control circuitry operable to drive the sensor element at a first frequency to determine an ambient relative humidity level in the surrounding environment and drive the sensor element at a second frequency lower than the first frequency for detecting the target gas. The gas sensor is operable to correct a measurement taken at the second drive frequency for cross sensitivity to relative humidity using the ambient relative humidity level determined at the first drive frequency.

Although particular embodiments of the invention have been described, it will be appreciated that many modifications/additions and/or substitutions may be made within the scope of the claimed invention.

## Claims

1. A thermal conductivity based gas sensor comprising:
an electrically resistive sensor element exposed to an environment surrounding the sensor for contact with a target gas, and
control circuitry operable to:
drive the sensor element at a first frequency for determining an ambient relative humidity level in the surrounding environment, and
drive the sensor element at a second frequency lower than the
first frequency for detecting the target gas,
wherein the gas sensor is operable to correct a measurement taken at the second drive frequency for cross sensitivity to relative humidity using the ambient relative humidity level determined at the first drive frequency.

2. The thermal conductivity based gas sensor of claim 1, wherein the first frequency is in the range 5 kHz ≤ f₁ ≤ 1 MHz.

3. The thermal conductivity based gas sensor of claim 1 or claim 2, wherein the second frequency is in the range 50 Hz ≤ f₂ ≤ 1 kHz.

4. The thermal conductivity based gas sensor of any preceding claim further comprising a temperature sensor, wherein the gas sensor is further operable to correct a measurement taken at the second drive frequency for cross sensitivity to ambient temperature using a temperature measurement provided by the temperature sensor.

5. The thermal conductivity based gas sensor of any preceding claim, wherein the electrically resistive sensor element is located on or in a metallization stack on a semiconductor substrate.

6. The thermal conductivity based gas sensor of any preceding claim, wherein the electrically resistive sensor element comprises Al, W, TiW(N), Pt or Cu.

7. An integrated circuit comprising the thermal conductivity based gas sensor of any preceding claim.

8. A Radio Frequency Identification (RFID) tag comprising the thermal conductivity based gas sensor of any of claims 1 to 6 or the integrated circuit of claim 7.

9. A mobile communications device comprising the thermal conductivity based gas sensor of any of claims 1 to 6 or the integrated circuit of claim 7.

10. A heating, ventilation and air conditioning (HVAC) system comprising the thermal conductivity based gas sensor of any of claims 1 to 6 or the integrated circuit of claim 7.

11. A method of detecting a gas using a thermal conductivity based gas sensor, the method comprising:
driving an electrically resistive sensor element of the gas sensor at a first frequency to determine an ambient relative humidity level in an environment surrounding the sensor;
driving the sensor element at a second frequency lower than the first frequency for detecting the gas, and
correcting a measurement taken at the second drive frequency for cross sensitivity to relative humidity using the ambient relative humidity level determined at the first drive frequency.

12. The method of claim 11, wherein the first frequency is in the range 5 kHz ≤ f₁ ≤ 1 MHz.

13. The method of claim 11 or claim 12, wherein the second frequency is in the range 50 Hz ≤ f₂ ≤ 1 kHz.

14. The method of any of claims 11 to 13 comprising:
measuring the ambient temperature in the environment surrounding the sensor; and
further correcting the measurement taken at the second drive frequency for cross sensitivity to temperature using the ambient temperature measurement.

15. The method of any of claims 11 to 14, wherein the gas comprises CO₂.
